# EUROPÄISCHE PATENTSCHRIFT

(11) **EP 2 344 388 B1**
(45) Veröffentlichungstag und Bekanntmachung des Hinweises auf die Patenterteilung: **17.04.2013**
(21) Anmeldenummer: 09752137.1
(22) Anmeldetag: 26.10.2009
(51) Int. Cl.: B64F 1/36

(54) **VERFAHREN UND VORRICHTUNG ZUM ABMINDERN DER ZIRKULATION IN DER WIRBELSCHLEPPE HINTER EINEM STARTENDEN ODER LANDENDEN FLUGZEUG**
METHOD AND APPARATUS FOR ALLEVIATING THE EFFECT OF WAKE VORTICES LEFT BY AN AIRCRAFT DURING TAKE-OFF OR LANDING
PROCÉDÉ ET DISPOSITIF POUR RÉDUIRE L'ÉNERGIE EMMAGASINÉE DANS LES TOURBILLONS GÉNÉRÉES PAR UN AVION AU DÉCOLLAGE OU À L'ATTERRISSAGE

(30) Priorität: 31.10.2008 DE 102008054107
(43) Veröffentlichungstag der Anmeldung: 20.07.2011
(73) Patentinhaber: Deutsches Zentrum für Luft- und Raumfahrt e.V., 51147 Köln (DE)
(72) Erfinder: SCHRÖDER, Andreas, 37073 Göttingen (DE); KONRATH, Robert, 37077 Göttingen (DE)
(74) Vertreter: Rehberg Hüppe + Partner
(86) Internationale Anmeldenummer: PCT/EP2009/064091
(87) Internationale Veröffentlichungsnummer: WO 2010/049394

(56) Entgegenhaltungen:
- DE-A1-102005 025 004

## Beschreibung

### TECHNISCHES GEBIET DER ERFINDUNG

Die Erfindung bezieht sich auf ein Verfahren zum Abmindern der Zirkulation von Schleppenwirbeln in der Wirbelschleppe hinter einem startenden oder landenden Flugzeug mit den Merkmalen des Oberbegriffs des unabhängigen Patentanspruchs 1 und auf eine Vorrichtung zum Abmindern der Zirkulation von Schleppenwirbeln in der Wirbelschleppe hinter einem auf einer Rollbahn startenden oder landenden Flugzeug mit den Merkmalen des Oberbegriffs des unabhängigen Patentanspruchs 9.

### STAND DER TECHNIK

Die aktive und verlässliche Abminderung der Zirkulation in den Wirbelschleppen hinter großen Verkehrsflugzeugen direkt an Rollbahnen ist von großem Interesse der Flughafenbetreiber und -kunden, da hierdurch der sicherheitsbedingte Mindestabstand zwischen zwei aufeinanderfolgenden Flugzeugen verringert werden kann, was eine effektivere Nutzung der Rollbahn ermöglicht und eine Zeitersparnis in der Flugzeugabfertigung bedeutet. In Zeiten kontinuierlich wachsendem Flugverkehrs und dem Erreichen der Kapazitätsgrenzen vieler Flughäfen ist eine lokale Lösung der Wirbelschleppenproblematik, die mit dem Gewicht und damit der möglichen Passagierzahl der Verkehrsflugzeuge zunimmt, ein wesentlicher Schritt zur Minimierung der Gefahren und Kosten des Flughafenbetriebs.

Ein Verfahren mit den Merkmalen des Oberbegriffs des unabhängigen Patentanspruchs 1 und eine Vorrichtung mit den Merkmalen des Oberbegriffs des unabhängigen Patentanspruchs 9 zum Abmindern der Zirkulation von Schleppenwirbeln in der Wirbelschleppe hinter einem startenden oder landenden Flugzeug sind aus der DE 10 2005 025 004 A1 bekannt. Hier wird an dem von dem Flugzeug überflogenen Ende der jeweiligen Rollbahn in zwei einander über eine Bahnmittelebene der Rollebene gegenüberliegenden und von dieser Bahnmittelebene beabstandeten Bereichen Luft in den Boden eingesaugt und in zwei anderen, näher an der Bahnmittelebene liegenden Bereichen wieder aus dem Boden ausgeblasen. Auf diese Weise entstehen auf beiden Seiten der Bahnmittelebene umlaufende Luftströmungen, deren Umlaufrichtungen gegenläufig zu den Umlaufrichtungen der Schleppenwirbel eines von der Rollbahn startenden oder auf dieser landenden Flugzeugs sind. Hierdurch wird die Umfangsgeschwindigkeit am Außenumfang der Schleppenwirbel hinter dem Flugzeug verändert, und spiralförmige Instabilitäten werden in die Schleppenwirbel induziert. Diese spiralförmigen Instabilitäten breiten sich entlang der Kerne der Schleppenwirbel aus, und zwar mit einer Ausbreitungsgeschwindigkeit, die etwa 20 % der Flugzeuggeschwindigkeit entspricht.

Damit das bekannte Verfahren bzw. die bekannte Vorrichtung wirksam ist, müssen erhebliche Luftmengen in den Boden eingesaugt und wieder aus dem Boden ausgeblasen werden. Nur dann wird eine Änderung der Umfangsgeschwindigkeit der Schleppenwirbel hinter dem Flugzeug hervorgerufen, die erforderlich ist, um die gewünschten spiralförmigen Instabilitäten zu induzieren. Konkret muss ein überwiegender Teil der Zirkulation umgelenkt werden. D. h., die am Boden erzeugte Luftströmung muss mehr als 50 % der Zirkulation der zu störenden Schleppenwirbel entsprechen. Im Ergebnis sind sehr leistungsstarke Gebläse erforderlich, um die Luftströmung zum Stören der Schleppenwirbel am Boden zu erzeugen.

### AUFGABE DER ERFINDUNG

Der Erfindung liegt die Aufgabe zugrunde, ein Verfahren und eine mit den Merkmalen des Oberbegriffs des unabhängigen Patentanspruchs 1 und eine Vorrichtung mit den Merkmalen des Oberbegriffs des unabhängigen Patentanspruchs 9 aufzuzeigen, die mit geringerem Aufwand eine aktive und verlässliche Störung von Wirbelschleppen hinter großen Verkehrsflugzeugen erlauben.

### LÖSUNG

Die Aufgabe der Erfindung wird durch ein Verfahren mit den Merkmalen des unabhängigen Patentanspruchs 1 und durch eine Vorrichtung mit den Merkmalen des unabhängigen Patentanspruchs 9 gelöst. Bevorzugte Ausführungsformen des neuen Verfahrens und der neuen Vorrichtung sind in den abhängigen Patentansprüchen definiert.

### BESCHREIBUNG DER ERFINDUNG

Erfindungsgemäß werden mit ihren Wirbelachsen unter einem Winkel zum Boden orientierte, vom Boden aufsteigende Ringwirbel als die Schleppenwirbel störende Luftströmungen erzeugt. Wenn dies so geschieht, dass sich die Ringwirbel auf die einzelnen Schleppenwirbel der Wirbelschleppe zu bewegen und mit diesen interagieren, was leicht zu realisieren ist, kommt es zu einem schnellen Zerfall der Schleppenwirbel durch starke Störungsanfachung und daraufhin erfolgende turbulente Dissipation. Hierfür sind vergleichsweise kleine Zirkulationen der Ringwirbel ausreichend. Die lokale Störung der Schleppenwirbel breitet sich mit ca. 20 % der Geschwindigkeit des Wirbelerzeugenden Flugzeugs entlang der Achse der Schleppenwirbel aus und zerstört mit gleicher Geschwindigkeit in beiden Richtungen die Wirbelschleppe. Bei z. B. 300 km/h Landegeschwindigkeit des Flugzeugs breitet sich die Zerstörung der Wirbelschleppe mit 60 km/h in positiver und negativer Richtung der Wirbelachse aus, und 30 Sekunden nach der Störungsinteraktion ist die Wirbelschleppe bereits über eine Länge von 1 km zerstört.

Die aufsteigenden Ringwirbel können mit in ihrem Zentrum aufsteigender oder absteigender Luftströmung erzeugt werden.

Der Winkel, unter dem die Ringwirbel mit ihren Wirbelachsen zum Boden orientiert erzeugt werden, ist vorzugsweise ein stumpfer Winkel, d. h. ein Winkel in dem Bereich von 45° bis 135°, insbesondere in dem Bereich von 60° bis 130°; ganz insbesondere kann er nahe 90° liegen. Vorzugsweise verläuft der Winkel orthogonal zu den Achsen der zu störenden Schleppenwirbel.

Die Zirkulation der Ringwirbel liegt typischerweise in einem Bereich von 5 bis 50 % der zu störenden Schleppenwirbel, vorzugsweise in einem Bereich von 10 bis 30 % dieser Zirkulation. Sie kann insbesondere weniger als ein Viertel der Zirkulation der zu störenden Schleppenwirbel betragen und damit vergleichsweise klein sein.

Je zu störendem Wirbelpaar wird bei dem neuen Verfahren mindestens ein Paar von Ringwirbeln zur Störungsentfachung erzeugt. Es können auch mehrere Paare von Ringwirbeln an gleichen oder verschiedenen Orten gleichzeitig oder hintereinander erzeugt werden, wobei sich die einzelnen Paare der Ringwirbel hinsichtlich der Störungsentfachung möglichst konstruktiv aufaddieren,

Der Ort der Erzeugung der Ringwirbel liegt vorzugsweise unter den Achsen der zu störenden Schleppenwirbel. Dabei kommt es nicht zwingend auf die Lage der Achsen der zu störenden Schleppenwirbel zum Zeitpunkt ihrer Entstehung an, sondern auf den Zeitpunkt der Störungsinteraktion. So kann ausgenutzt werden, dass die wesentlichen Schleppenwirbel hinter einem Flugzeug absteigen und sich durch Wechselwirkung mit dem Boden seitlich von dem Flugzeug weg verlagern. Es ist allerdings von Interesse, die Schleppenwirbel möglichst frühzeitig, d. h. vor einer starken Ausbreitung der Wirbelschleppe zu stören.

Konkret können die Ringwirbel in einem Bereich am Boden erzeugt werden, den das Flugzeug niedrig überfliegt.

Eine Wirbelschleppe hinter einem startenden oder landenden Flugzeug setzt sich typischerweise aus mehreren Wirbelpaaren zusammen, insbesondere den Flügelspitzenwirbeln und den Klappenwirbeln. Da sich die gleichsinnig orientierten Wirbel dieser Wirbelpaare üblicherweise in einem Abstand zwischen 4 und 8 Flügelspannweiten hinter dem Fugzeug vereinigen und eine erhöhte Sensitivität der Wirbelschleppe gegenüber Störungen nach ca. 25 - 30 Flügelspannweiten erreicht ist, ist es 20 bis 50 Spannweiten, vorzugsweise 25 bis 30 Spannweiten, hinter dem Flugzeug besonders effektiv möglich, die gewünschten Störungen mit den erfindungsgemäßen Ringwirbeln zu entfachen. Insbesondere ist die effektive Störungsinteraktion hier durch Ringwirbel relativ kleiner Zirkulation möglich. Außerdem hat sich die Wirbelschleppe noch nicht weit ausgebreitet. Eine sehr frühzeitige Interaktion der Ringwirbel binnen 4 - 8 Spannweiten nach dem Flugzeug ist allerdings auch in Betracht zu ziehen.

Wirbelschleppengeneratoren zur Erzeugung von Ringwirbeln sind grundsätzlich bekannt. Derartige bekannte Ringwirbelgeneratoren (RWG) sind in der Lage, stabile und reproduzierbare Ringwirbel großer Zirkulation auf effiziente Art und Weise mit definierter Ausbreitungsrichtung und Geschwindigkeit sowie bekanntem Wirbel- und Ringdurchmesser zu produzieren. Das Grundprinzip eines solchen Ringwirbelgenerators ist einfach und wird im Folgenden noch beispielhaft erläutert werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden unter Bezugnahme auf die beigefügten Zeichnungen näher erläutert uns beschrieben.
- **Fig. 1**: zeigt die Ausbreitung einer Wirbelschleppe hinter einem startenden oder landenden Flugzeug.
- **Fig. 2**: zeigt eine Ausführungsform der vorliegenden Erfindung mit vier in eine Rollbahn eingelassenen Wirbelgeneratoren zum Stören der Flügelspitzenwirbel und der Klappenwirbel hinter einem landenden Flugzeug.
- **Fig. 3**: skizziert den Aufbau einer möglichen Ausführungsform eines der Wirbelgeneratoren gemäß Fig. 2; und
- **Fig. 4**: skizziert den Aufbau einer anderen möglichen Ausführungsform eines Wirbelgenerators.

### FIGURENBESCHREIBUNG

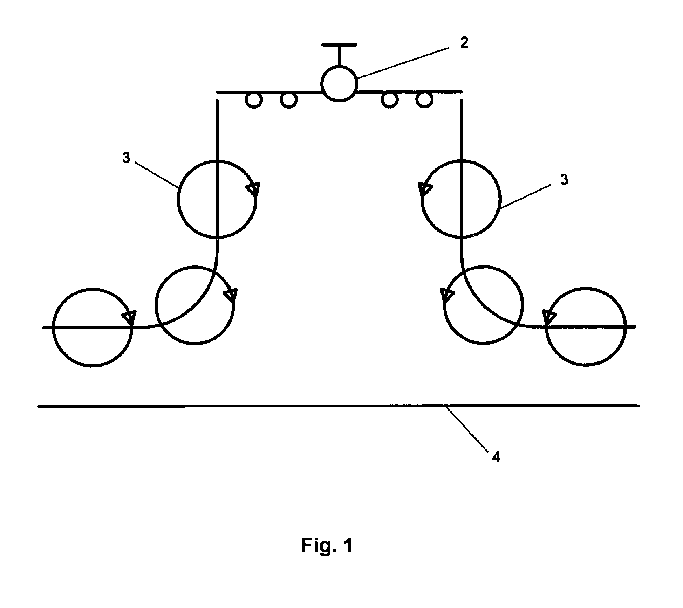

**Fig. 1** skizziert die Wirbelschleppe 1 hinter einem startenden oder landenden Flugzeug 2, wobei von den Schleppenwirbeln hier ausschließlich die Flügelspitzenwirbel 3 berücksichtigt sind. Die Flügelspitzenwirbel 3 treten wie alle Schleppenwirbel als Paar mit gegenläufiger Zirkulation auf. Sie steigen hinter dem Flugzeug 2 zum Boden 4 hin ab, wobei Fig. 1 die Lage der Flügelspitzenwirbel 1, 2 und 3 Minuten nach ihrer Entstehung an dem Flugzeug 2 skizziert. Sobald die Flügelspitzenwirbel 3 in die Nähe des Boden 4 gelangen, verlagern sie sich durch Wechselwirkung mit dem Boden 4 seitwärts, so dass die Wirbelschleppe 1 nicht nur eine große vertikale sondern auch eine große horizontale Ausdehnung hinter dem Flugzeug 2 einnimmt, binnen derer sie nachfolgende Flugzeuge gefährdet, bis die Schleppenwirbel zerfallen sind. Dieser Zerfall nimmt bei schweren Flugzeugen 2 und entsprechend starker Zirkulation der Flügelspitzenwirbel 3 einige Minuten in Anspruch. Die vorliegende Erfindung zielt darauf ab, diesen Zeitraum erheblich zu verkürzen.

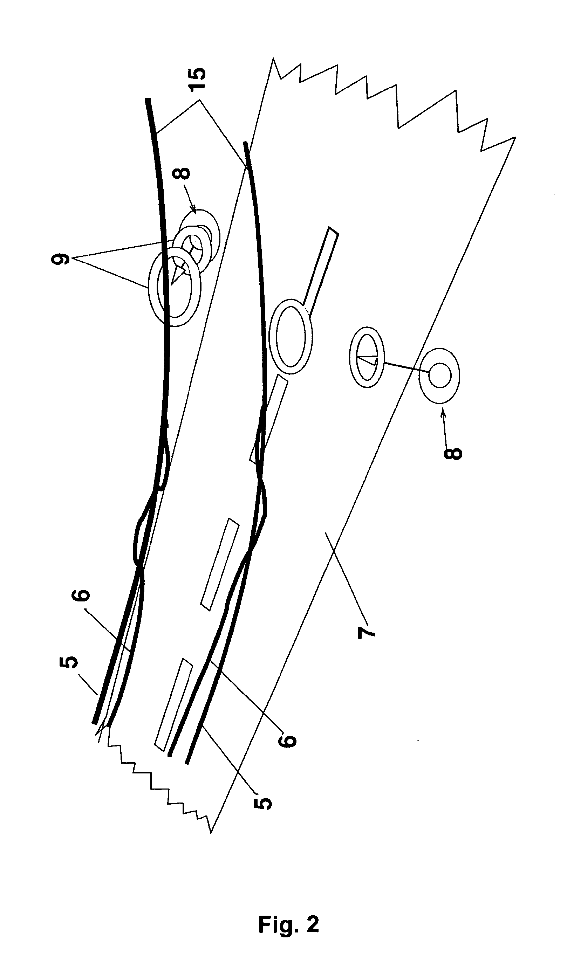

**Fig. 2** skizziert den Verlauf von Wirbelachsen 5 der Flügelspitzenwirbel und von Wirbelachsen 6 der Klappenwirbel hinter einem hier nicht dargestellten, auf einer Rollbahn 7 landenden Flugzeug. Die Flügelspitzenwirbel und die Klappenwirbel vereinigen sich unter Addition ihrer Zirkulation binnen 4 bis 8 Spannweiten hinter dem Flugzeug. Unterhalb von Wirbelachsen 15 dieser vereinigten Schleppenwirbel sind neben der Rollbahn 7 Wirbelgeneratoren 8 vorgesehen, um aufsteigende Ringwirbel 9 zu erzeugen, deren Wirbelachsen hier im Wesentlichen senkrecht zu der Oberfläche der Rollbahn 7 ausgerichtet sind, während sie unter einem Winkel kleiner 90° in den Bereich der Wirbelachsen 15 über der Rollbahn 7 aufsteigen. Diese Ringwirbel 9 wechselwirken mit den Schleppenwirbeln, indem sie eine zum Zerfall des jeweiligen Schleppenwirbels führende Störung induzieren, die sich von dem Ort der unmittelbaren Wechselwirkung in beide Richtungen längs der Wirbelachsen 15 fortpflanzt. In Fig. 2 ist dargestellt, dass jeder Wirbelgenerator 8 zwei Ringwirbel 9 ausstößt. Mindestens wird je zu störendem Schleppenwirbel ein Ringwirbel 9 benötigt.

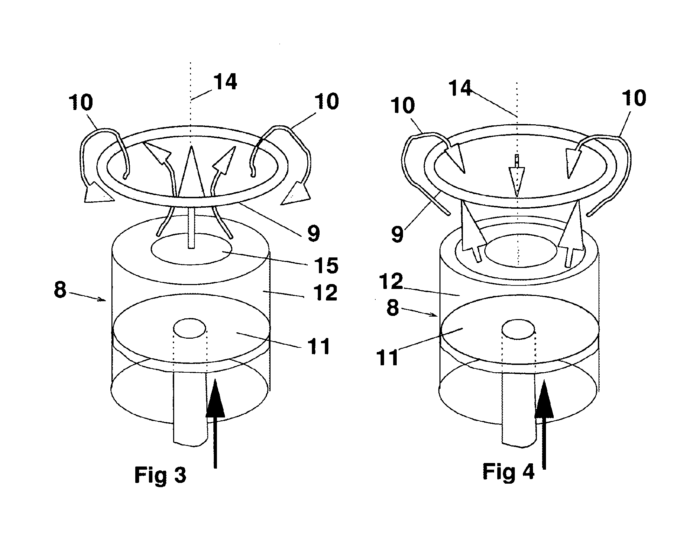

**Fig. 3** skizziert eine mögliche Ausführungsform eines Wirbelgenerators 8 zur Erzeugung eines Ringwirbels 9 mit im Zentrum aufsteigender Luftströmung 10. Ein Kolben 11 wird in einem Druckraum 12 nach oben bewegt und presst dabei Luft aus dem zylindrischen Druckraum 12 durch eine zentrale kreisförmige Öffnung 15 mit gegenüber dem Druckraum reduziertem Durchmesser ins Freie. Die resultierende Ringwirbel 9 steigt in Richtung seiner Wirbelachse 14 nach oben auf.

**Fig. 3** skizziert eine mögliche Ausführungsform eines Wirbelgenerators 8 zur Erzeugung eines Ringwirbels 9 mit im Zentrum absteigender Luftströmung 10. Hier wird die Luft aus dem zylindrischen Druckraum 12 von dem Kolben 11 durch einen Ringspalt 13 ins Freie gepresst. Die resultierende Ringwirbel 9 steigt trotz anderer Drehrichtung bei gleicher Ausrichtung seiner Wirbelachse 14 auch hier nach oben auf.

### BEZUGSZEICHENLISTE

- 1: Wirbelschleppe
- 2: Flugzeug
- 3: Flügelspitzenwirbel
- 4: Boden
- 5: Achse eines Flügelspitzenwirbels
- 6: Achse eines Klappenwirbels
- 7: Rollwagen
- 8: Ringwirbelgenerator
- 9: Ringwirbel
- 10: Luftströmung
- 11: Kolben
- 12: Druckraum
- 13: Ringspalt
- 14: Wirbelachse
- 15: Öffnung

## Patentansprüche

1. Verfahren zum Abmindern der Zirkulation von Schleppenwirbeln in der Wirbelschleppe hinter einem startenden oder landenden Flugzeug, wobei auf beiden Seiten des Flugzeugs Luftströmungen am Boden erzeugt werden, die die Schleppenwirbel stören, um deren Zerfall zu induzieren, **dadurch gekennzeichnet, dass** mit ihren Wirbelachsen (14) unter einem Winkel zum Boden (4) orientierte, vom Boden (4) aufsteigende Ringwirbel (9) als die Schleppenwirbel (3) störende Luftströmungen erzeugt werden.

2. Verfahren nach Anspruch 1, **dadurch gekennzeichnet, dass** die Ringwirbel (9) mit in ihrem Zentrum aufsteigender oder absteigender Luftströmung (10) erzeugt werden.

3. Verfahren nach Anspruch 1 oder 2, **dadurch gekennzeichnet, dass** die Ringwirbel (9) so erzeugt werden, dass sie mit ihren Wirbelachsen (14) unter einem Winkel zwischen 45° und 135°, vorzugsweise zwischen 60° und 120°, zum Boden (4) orientiert sind.

4. Verfahren nach Anspruch 1, 2 oder 3, **dadurch gekennzeichnet, dass** die Ringwirbel (9) mit einer Zirkulation erzeugt werden, die 5 bis 50 %, vorzugsweise 10 bis 30 % der Zirkulation der zu störenden Schleppenwirbel (3) beträgt.

5. Verfahren nach einem der Ansprüche 1 bis 4, **dadurch gekennzeichnet, dass** je Paar von gegenläufigen Schleppenwirbeln (3) mindestens ein Paar von Ringwirbeln (9) erzeugt wird.

6. Verfahren nach einem der Ansprüche 1 bis 5, **dadurch gekennzeichnet, dass** die Ringwirbel (9) unterhalb der Achsen (5, 6) der zu störenden Schleppenwirbel (3) erzeugt werden.

7. Verfahren nach einem der Ansprüche 1 bis 6, **dadurch gekennzeichnet, dass** die Ringwirbel (9) in einem Bereich am Boden (4) erzeugt werden, den das Flugzeug (1) niedrig überfliegt.

8. Verfahren nach einem der Ansprüche 1 bis 6, **dadurch gekennzeichnet, dass** die Ringwirbel so hinter dem Flugzeug (2) erzeugt werden, dass sie 20 bis 50 Spannweiten, vorzugsweise 25 bis 30 Spannweiten hinter dem Flugzeug (2) mit den Schleppenwirbeln (3) wechselwirken.

9. Vorrichtung zum Abmindern der Zirkulation von Schleppenwirbeln in der Wirbelschleppe hinter einem auf einer Rollbahn startenden oder landenden Flugzeug, wobei auf beiden Seiten der Rollbahn Luftströmungsgeneratoren am Boden vorgesehen sind, um die Schleppenwirbel störende Luftströmungen zu erzeugen, **dadurch gekennzeichnet, dass** die Luftströmungsgeneratoren unter einem Winkel zum Boden (4) orientierte Ringwirbelgeneratoren (8) sind, die mit ihren Wirbelachsen (14) unter dem Winkel zum Boden (4) orientierte, vom Boden (4) aufsteigende Ringwirbel (9) als die Schleppenwirbel (3) störende Luftströmungen erzeugen.

10. Vorrichtung nach Anspruch 9, **dadurch gekennzeichnet, dass** die Ringwirbelgeneratoren (8) die Ringwirbel (9) mit in ihrem Zentrum aufsteigender Luftströmung (10) erzeugen.

11. Vorrichtung nach Anspruch 9 oder 10, **dadurch gekennzeichnet, dass** die Ringwirbelgeneratoren (8) unter einem Winkel zwischen 45° und 135°, vorzugsweise zwischen 60° und 120°, zum Boden (4) orientiert sind.

12. Vorrichtung nach Anspruch 9, 10 oder 11, **dadurch gekennzeichnet, dass** die Ringwirbelgeneratoren (8) so dimensioniert sind, dass sie die Ringwirbel (9) mit einer Zirkulation erzeugen, die 5 bis 50 %, vorzugsweise 10 bis 30 % der Zirkulation der zu störenden Schleppenwirbel (3) beträgt.

13. Vorrichtung nach einem der Ansprüche 9 bis 12, **dadurch gekennzeichnet, dass** je Paar von gegenläufigen Schleppenwirbeln (3) mindestens ein Paar von Ringwirbelgeneratoren (8) auf beiden Seiten der Rollbahn (7) vorgesehen ist.

14. Vorrichtung nach einem der Ansprüche 9 bis 13, **dadurch gekennzeichnet, dass** die Ringwirbelgeneratoren (8) unter den Achsen (5, 6) der zu störenden Schleppenwirbel (3) angeordnet sind und/oder dass die Ringwirbelgeneratoren (8) in einem Bereich der Rollbahn (7) am Boden (4) angeordnet sind, den das Flugzeug (2) niedrig überfliegt.

15. Vorrichtung nach einem der Ansprüche 9 bis 14, **dadurch gekennzeichnet, dass** die Ringwirbelgeneratoren (8) in die Rollbahn (7) eingelassen und/oder neben dieser angeordnet sind.

## Claims

1. Method of reducing the circulation of wake vortices in the wake turbulence behind an airplane that takes off or lands, wherein airflows are generated at the ground on both sides of the airplane, which disturb the wake vortices to induce their decay, **characterized in that** ring vortices (9) whose vortex axes (14) are oriented at an angle with regard to the ground (4) and which ascend from the ground (4) are generated as airflows disturbing the wake vortices (3).

2. Method of claim 1, **characterized in that** the ring vortices (9) are generated with a ascending or descending airflow (10) in their centre.

3. Method of claim 1 or 2, **characterized in that** the ring vortices (9) are generated in such a way that they are oriented with their vortex axes (14) at an angle between 45° and 135°, preferably between 60° and 120°, with regard to the ground (4).

4. Method of claim 1, 2 or 3, **characterized in that** the ring vortices (9) are generated at a circulation which is 5 to 50 %, preferably 10 to 30 % of the circulation of the wake vortices (3) to be disturbed.

5. Method of any of the claims 1 to 4, **characterized in that** at least one pair of ring vortices (9) is generated per pair of opposite wake vortices (3).

6. Method of any of the claims 1 to 5, **characterized in that** the ring vortices (9) are generated below the axes (5, 6) of the wake vortices (3) to be disturbed.

7. Method of any of the claims 1 to 6, **characterized in that** the ring vortices (9) are generated in an area at the ground (4) which is flown over by the airplane (1) at a low height.

8. Method of any of the claims 1 to 6, **characterized in that** the ring vortices are generated behind the airplane (2) in such a way that they interact with the wake vortices (3) at 20 to 50 wing spans, preferably 25 to 30 wing spans, behind the airplane (2).

9. Device for reducing the circulation of wake vortices in the wake turbulence behind an airplane that takes off or lands on a runway, wherein on both sides of the runway airflow generators are provided at the ground to generate airflows disturbing the wake vortices, **characterized in that** the airflow generators are ring vortex generators (8) oriented at an angle with regard to the ground (4), which generate ring vortices (9) which, with their vortex axes (14), are oriented at the angle with regard to the ground (4) and which ascend from the ground (4) as airflows disturbing the wake vortices (3).

10. Device of claim 9, **characterized in that** the ring vortex generators (8) generate the ring vortices (9) with an airflow (10) ascending in their centre.

11. Device of claim 9 or 10, **characterized in that** the ring vortex generators (8) are oriented at an angle between 45° and 135°, preferably between 60° and 120°, with regard to the ground (4).

12. Device of claim 9, 10 or 11 **characterized in that** the ring vortex generators (8) are dimensioned in such a way that they generate the ring vortices (9) at a circulation which is 5 to 50 %, preferably 10 to 30 % of the circulation of the wake vortices (3) to be disturbed.

13. Device of any of the claims 9 to 12, **characterized in that** at least one pair of ring vortex generators (8) is arranged on both sides of the runway (7) per pair of opposite wake vortices (3).

14. Device of any of the claims 9 to 13, **characterized in that** the ring vortex generators (8) are arranged below the axes (5, 6) of the wake vortices (3) to be disturbed and/or **in that** the ring vortex generators (8) are arranged in an area of the runway (7) at the ground (4) which is flown over by the airplane (2) at a low height.

15. Device of any of the claims 9 to 14, **characterized in that** the ring vortex generators (8) are embedded in the runway (7) and/or arranged next to the runway (7).

## Revendications

1. Procédé pour la réduction de la circulation de turbulences de traînées dans la traînée turbulente à l'arrière d'un avion au décollage ou à l'atterrissage, des écoulements d'air étant produits des deux côtés de l'avion qui perturbent la turbulence de traînée, pour provoquer sa désagrégation, **caractérisé en ce que** des turbulences annulaires(9) montant du sol (4) avec leurs axes de turbulences (14) formant un angle avec le sol (4) sont produites sous la forme d'écoulements d'air perturbant les traînées turbulentes (3).

2. Procédé selon la revendication 1, **caractérisé en ce que** les turbulences annulaires (9) sont produites avec un écoulement d'air (10) montant ou descendant dans leur centre.

3. Procédé selon la revendication 1 ou 2, **caractérisé en ce que** les turbulences annulaires (9) sont produites de façon à ce qu'elles soient orientées avec leurs axes de turbulences (14) avec un angle entre 45° et 135°, de préférence entre 60° et 120°, par rapport au sol (4).

4. Procédé selon la revendication 1, 2 ou 3, **caractérisé en ce que** les turbulences annulaires (9) sont produites avec une circulation qui représente 5 à 50%, de préférence 10 à 30% de la circulation des turbulences de traînée (3) à perturber.

5. Procédé selon l'une des revendications 1 à 4, **caractérisé en ce que** pour chaque paire de turbulences de traînées (3) opposées, au moins une paire de turbulences annulaires (9) est formée.

6. Procédé selon l'une des revendications 1 à 5, **caractérisé en ce que** les turbulences annulaires (9) sont produites en dessous des axes (5, 6) des turbulences de traînées (3) à perturber.

7. Procédé selon l'une des revendications 1 à 6, **caractérisé en ce que** les turbulences annulaires (9) sont produites dans une zone sur le sol (4) que l'avion (2) survole à basse altitude.

8. Procédé selon l'une des revendications 1 à 6, **caractérisé en ce que** les turbulences annulaires sont produites à l'arrière de l'avion (2) de façon à ce qu'elles interagissent avec les turbulences de traînées (3) sur 20 à 50 envergures, de préférence sur 25 à 30 envergures derrière l'avion (2).

9. Dispositif de réduction de la circulation de turbulences de traînées dans la traînée turbulente à l'arrière d'un avion au décollage ou à l'atterrissage sur une piste, des générateurs d'écoulements d'air étant prévus sur le sol des deux côtés de la piste pour produire les écoulements d'air perturbant les turbulences de traînées, **caractérisé en ce que** les générateurs d'écoulements d'air sont des générateurs de turbulences annulaires (8) orientés avec un angle par rapport au sol (4), qui produisent, avec leurs axes de turbulences (14) formant un angle avec le sol (4), des turbulences annulaires (9) montant du sol (4) en tant qu'écoulements d'air perturbant les turbulences de traînées (3).

10. Dispositif selon la revendication 9, **caractérisé en ce que** les générateurs de turbulences annulaires (8) produisent les turbulences annulaires (9) avec un écoulement d'air (10) montant en leur centre.

11. Dispositif selon la revendication 9 ou 10, **caractérisé en ce que** les générateurs de turbulences annulaires (8) sont orientés avec un angle entre 45° et 135°, de préférence entre 60° et 120°, par rapport au sol (4).

12. Dispositif selon la revendication 9, 10 ou 11, **caractérisé en ce que** les générateurs de turbulences annulaires (8) sont dimensionnés de façon à ce qu'ils produisent les turbulences annulaires (9) avec une circulation qui représente 5 à 50%, de préférence 10 à 30%, de la circulation des turbulences de traînées (3) à perturber.

13. Dispositif selon l'une des revendications 9 à 12, **caractérisé en ce que** pour chaque paire de turbulences de traînées (3) opposées au moins une paire de générateurs de turbulences annulaires (8) est prévue des deux côtés de la piste (7).

14. Dispositif selon l'une des revendications 9 à 13, **caractérisé en ce que** les générateurs de turbulences annulaires (8) sont disposés sous les axes (5, 6) des turbulences de traînées (3) à perturber et/ou **en ce que** les générateurs de turbulences annulaires (8) sont disposés dans une zone de la piste (7) sur le sol (4), que l'avion (2) survole à basse altitude.

15. Dispositif selon l'une des revendications 9 à 14, **caractérisé en ce que** les générateurs de turbulences annulaires (8) sont intégrés dans la piste (7) et/ou sont disposés à côté de celle-ci.
